# EUROPEAN PATENT SPECIFICATION

(11) **EP 2 036 777 B1**
(45) Date of publication and mention of the grant of the patent: **03.03.2010**
(21) Application number: 07017856.1
(22) Date of filing: 12.09.2007
(51) Int. Cl.: B60R 16/023

(54) **Method and system of providing driving data to a driver of a vehicle**
Verfahren und System zur Bereitstellung von Fahrinformationen für den Fahrer eines Fahrzeugs
Procédé et système pour fournir des données de direction pour le conducteur d'un véhicule

(43) Date of publication of application: 18.03.2009
(73) Proprietor: Harman Becker Automotive Systems GmbH, 76307 Karlsbad (DE)
(72) Inventor: Hünig, Daniel, 72074 Tübingen (DE); Geiselhart, Peter, 76275 Ettlingen (DE)
(74) Representative: Bertsch, Florian Oliver

(56) References cited:
- EP-A- 1 018 449
- EP-A- 1 515 034
- EP-A- 2 028 058
- DE-A1- 3 001 470
- DE-A1- 4 446 859
- DE-A1- 19 929 426

## Description

### Field of the Invention

The present invention relates to a method and a system of providing driving data to a driver of a vehicle.

### Background of the Invention

In conventional vehicles, the driver of the vehicle is informed about driving information by an instrument panel mounted to the dashboard of the vehicle. The instruments indicate quantities such as the vehicle velocity or the fuel remaining in the tank of the vehicle by analog gauges with needles pointing to the respective values. In more modern vehicles, instrument panels are constructed with digital displays displaying the quantity numerically. Also, additional information is provided to the driver in modern vehicles. The German patent DE 30 01 470 C2 discloses a display device for driving data in a vehicle. The display device comprises a numerical display which can provide different types of information to the driver of the vehicle, such as temperature, the current fuel consumption, or the fuel consumption over a predetermined time or distance interval as well as the driving distance. Such a system has the disadvantage that only one value is displayed at a time, and that the displayed value itself may be meaningless, such as the current fuel consumption. Displaying the current fuel consumption to the driver does not provide useful information to the driver, since it depends mainly on the current driving conditions, such as whether the vehicle is accelerating or driving uphill. Yet it is very desirable for the driver of the vehicle to obtain useful driving information, particularly concerning the fuel consumption of the vehicle, as high fuel consumption pollutes the environment and results in high operating costs for the vehicle.

An improvement of providing such information was achieved by the fuel consumption display system of the U.S. patent US 6,453,731 B1. The display system simultaneously displays a short-term fuel consumption and a longer-term fuel consumption. Although the driver can compare the current fuel consumption to the average fuel consumption with such a display system, the displayed information is still not very meaningful, as again the current fuel consumption strongly depends on the driving situation. For example, if the vehicle is accelerating, the current fuel consumption will lie above the average fuel consumption, whereas when the vehicle is cruising at highway speed, the current fuel consumption will be below the average fuel consumption. Since this will almost always be the case, the driver of the vehicle is not provided with useful information regarding fuel consumption of the vehicle. Particularly, the display does not indicate to the driver how he can conserve fuel. Yet conserving fuel is of particular significance nowadays for environmental and monetary purposes. For environmental purposes, it is furthermore desired to reduce CO₂ emission, which is closely related to fuel consumption.

As a result, there is the need of providing the driver of a vehicle with meaningful information concerning the fuel consumption or CO₂ emission of the vehicle. Particularly, there is the need of providing such information to the driver of the vehicle in such a way that the driver of the vehicle is enabled to reduce CO₂ emissions or fuel consumption.

### Summary of the Invention

This need is met by the features of the independent claims. In the dependent claims, preferred embodiments of the invention are described.

According to a first aspect of the invention, a method of providing driving data to a driver of the vehicle is provided, comprising the steps of obtaining driving data of the vehicle comprising at least fuel consumption of the vehicle or CO₂ emission of the vehicle, performing an evaluation of the driving data based on a comparison of the driving data to reference driving data, wherein an evaluation value is obtained, and providing the driving data, reference driving data and the evaluation value to the driver of the vehicle. Evaluation values are provided to the driver in form of credits displayed as graphical symbols on a display unit. The evaluation of the driving data may comprise further steps, such as transforming the driving data to other units or adjusting the driving data. Comparing the obtained driving data to reference driving data can for example be performed by forming a difference between the two, yet other methods of comparing these data are possible. It is just important that based on the obtained driving data and reference driving data an evaluation value is obtained. The evaluation value may for example indicate whether the obtained driving data, such as a current fuel consumption, is high or low compared to the reference driving data. This comparison and the evaluation may take the current driving situation and other conditions and/or data into account, which will be explained in more detail later. The driving data, reference driving data and the evaluation value are provided to the driver of the vehicle, e.g. they are displayed on a screen. Other ways of providing the information to the driver are also possible, such as providing the information on a head-up display, or in audible form. It is not necessary that the reference data being provided to the driver is the same reference data that was used in the evaluation of the obtained driving data. The driving data may be instantaneously provided to the driver, e.g. directly after it has been obtained, or at predetermined times. The evaluation of the driving data may be performed instantaneously, and a current evaluation value is provided to the driver, yet it may also be performed at predetermined times or over predetermined time intervals, and the evaluation value may then only be provided at the predetermined times to the driver. As the velocity of the vehicle is generally known, time can be directly translated into distance. Furthermore, vehicles are generally provided with means for measuring distance. Accordingly, obtaining the driving data, performing an evaluation of the driving data, and providing the driving data and the evaluation value to the driver may also occur at predetermined distances, i.e. after driving a predetermined distance. The method has the advantage that meaningful information regarding the fuel consumption and/or CO₂ emission of the vehicle is provided to the driver. By deriving an evaluation value from obtained driving data and reference driving data a meaningful information is obtained which allows the driver of the vehicle to judge and evaluate his driving. By means of the evaluation value provided to the driver, the driver is thus enabled to drive more efficiently, reducing fuel consumption and CO₂ emission.

Preferably, the driving data is obtained by collecting driving data over a predetermined driving distance or over a predetermined driving time interval and averaging the collected driving data. The driving data may for example be provided at a certain sampling rate in digital form, and the driving data may thus be collected over a number of samples corresponding to a driving time interval or a driving distance and averaged. An average may simply be obtained by forming the sum of the collected values and dividing by their number, yet it may also be obtained by weighting the collected driving data, i.e. a weighted average, or processing the collected data in any other way before performing the averaging. Weighting can occur so that driving data collected in the past is not considered as much as driving data currently collected, yet it may also occur using parameters relating to the driving conditions. As an example, driving data obtained during an acceleration process of the vehicle, or obtained while the vehicle is standing still may be weighted differently than driving data obtained during times when the vehicle is traveling with constant velocity. Preferably, several averages of the driving data over different driving distances and driving time intervals are obtained. For example, an average over the last five minutes of driving is obtained, an average over the last 1,000 kilometers driven is obtained and an average over several thousand kilometers or the total kilometers traveled by the vehicle is obtained. Accordingly, several evaluation values may be obtained for the several averages, and the several averages may be provided to the driver. Averages over less than one second may be considered as instantaneous driving data and may also be provided by the driver. The use of averages has the advantage that data may be weighted differently for different driving situations, and averages are well suited for providing meaningful information to the driver of the vehicle. Using different time and/or distance regimes has the advantage that average driving data for a particular route section or for a particular trip or almost instantaneous driving data can be provided to the driver.

Modern vehicles often comprise controller area networks for distributing information obtained from sensors in the vehicle. According to an embodiment of the invention, the driving data is obtained by accessing the controller area network of the vehicle. This has the advantage that no additional sensors are required for detecting the vehicle fuel consumption, or CO₂ emission, since this data may already be available on the controller area network. Alternatively, separate sensors such as fuel sensors or CO₂ emission sensors may be mounted to the vehicle. CO₂ emission can also be calculated from the fuel consumption if the type of fuel is known. Fuel flow sensors are advantageous in vehicles not comprising a controller area network.

The reference data may comprise the default driving data and/or past-driving data. The default driving data may be such driving data that a manufacturer of the vehicle provides. The manufacturer of the vehicle may for example provide a default fuel consumption, a default CO₂ emission, and other data, such as a default weight of the vehicle. Default data may be updated when new information becomes available, and it may also be obtained from data sources other than the vehicle manufacturer, such as from an automobile club and the like. An automobile club may for example have performed a series of tests on similar vehicles, and it may thus have determined a default fuel consumption. Past-driving data is for example driving data of the vehicle that has been collected over past time intervals. It may contain driving data directly obtained from the controller area network of the vehicle, or it may contain averages of such data. The past-driving data may also be structured and/or sorted, e.g. according to properties of the road section on which the driving data was obtained, or according to driving conditions under which the driving data was obtained. Using default driving data as reference data has the advantage that a fixed reference is available for evaluating the obtained driving data. Using past-driving data as reference has the advantage that obtained driving data can be compared to driving data obtained in similar driving conditions, or to realistic average driving data. Generally, a particular vehicle driven by a particular person will have a different average fuel consumption than the default fuel consumption provided by the manufacturer. The actual average fuel consumption may in certain situations be a better reference value, e.g. when it is supposed to be determined whether fuel consumption has improved or worsened.

According to another embodiment of the invention, an incline of the road section the vehicle was traveling on when the driving data was collected is taken into account when performing an evaluation of the driving data. The incline of the road section may be obtained by determining differences in altitude using a position determination sensor, e.g. a GPS sensor. In general, when the vehicle is driving up a hill, fuel consumption will be higher compared to when the vehicle is driving down the hill. Without accounting for the incline, when comparing such fuel consumptions to reference data, results drawn from the comparison are rather meaningless. It is thus advantageous to adjust the driving data for the incline of the road section. As a result, the driver can determine whether his current fuel consumption is relatively low or relatively high, and can change his driving habits accordingly. When driving on an incline, the incline can be determined by collecting GPS data at different positions along the incline, and evaluating the altitude at these positions. Alternatively, a separate sensor may be provided in the vehicle, such as an air pressure sensor for determining altitude, or an inclination sensor. Alternatively, driving data may be collected when the vehicle is driving on road sections with a particular incline and stored as past-driving data, and these reference driving data are provided and compared to the current driving data on a similar incline. In both cases, a meaningful comparison between the obtained driving data and reference driving data is enabled. Accordingly, a better evaluation of the obtained driving data can be performed. The evaluation value may thus more precisely indicate whether the obtained driving data, e.g. fuel consumption, is good or poor. When such an evaluation value is provided to the driver, the driver immediately knows whether he is driving economically or not, and he can adjust his driving accordingly.

According to another embodiment of the present invention, one or a combination of the following vehicle data is obtained and taken into account in the evaluation of the obtained driving data: vehicle velocity, distance traveled by a vehicle, wheel sensor data, revolution speed of vehicle engine, engine temperature, tire pressure, vehicle payload. Vehicle velocity or distance traveled by a vehicle may for example be used to convert the obtained driving data to other units. Vehicle payload, tire pressure and engine temperature may all influence the fuel consumption of the vehicle. Taking these properties into account in the evaluation of the obtained driving data may thus provide a better evaluation value. As the evaluation value is supposed to provide meaningful information to the driver, it is advantageous to use one or a combination of these vehicle data in the process of generating the evaluation value. For example, if a vehicle is heavily loaded, it may use more fuel, as a result of which a high fuel consumption is provided to the driver, even though the driver is driving economically. Providing an evaluation value to the driver taking the vehicle payload into account is thus helpful for the driver, as he can adjust his driving style according to the evaluation value.

According to the invention, evaluation values are provided to the driver in the form of credits displayed as graphical symbols on a display unit, such as a LCD display. Graphical symbols may be dots, squares, circles and the like, or more complex graphical representations. Preferably, a positive credit is provided if the evaluation value is above a predetermined threshold value, whereas a negative credit is provided if the evaluation value is below a predetermined threshold value. As said before, the evaluation values and thus the credits may be provided at predetermined time or distance intervals. The evaluation value may be calculated in such a way that it has a high value when the driver of the vehicle drives economically, whereas it has a low value when the driver drives uneconomically. A positive credit is thus provided for economic driving, and a negative credit for uneconomic driving. It should be clear that it is equivalent if the evaluation value is calculated such that a low value, e.g. a negative value indicates economic driving, and a positive credit is provided if this low evaluation value is below a predetermined threshold value. In that case a negative credit is provided if the evaluation value is above a predetermined threshold value. Preferably, credits are accumulated. They may for example be reset by the driver after a certain number of credits have accumulated. Positive and negative credits in the form of graphical symbols thus accumulate on a display unit while driving, whereby the driver obtains an indication of his economic driving performance.

Additional evaluation values may be provided based on the type of route traveled and/or driving conditions. The type of route traveled may for example be detected by a GPS unit, yet it may also be derived from vehicle data, such as the distance traveled by the vehicle, wheel sensor data, or engine temperature. The route may for example be a short-distance route, which can be detected in that the engine temperature hardly rises, and the distance traveled by the vehicle since the start of the engine is very short. Short-distance routes generally use a lot of fuel, and are thus not economic. Accordingly, an evaluation value indicating the high fuel consumption or poor economy of the traveled route may be provided to the driver. Furthermore, e.g. by accessing the revolution speed of the engine or an acceleration sensor, driving conditions may be determined, such as that the vehicle was accelerating and decelerating frequently and strongly on a route. Such a driving increases the fuel consumption unnecessarily and substantially. Therefore, an additional evaluation value indicating that the present kind of driving results in a poor fuel economy may be provided to the driver. Such information enables the driver to adjust his driving for a better fuel economy. In particular, a negative credit may be provided if it is determined that the vehicle has traveled a distance shorter than a predetermined distance. Furthermore, a positive credit may be provided if it is determined that an acceleration higher than a predetermined acceleration threshold acceleration and/or a breaking stronger than a predetermined deceleration did not occur over a predetermined traveling distance. These credits may be provided in form of the same graphical symbols described above, yet they may also be provided in form of separate graphical symbols.

According to a preferred embodiment, driving data over a predetermined traveled distance and/or a moving average over a predetermined traveled distance and/or a default driving data are provided to the driver in form of a graphical display of a graph. The moving average may also be a weighted average, and may alternatively be a time average. For example on a LCD screen a curve indicating the fuel consumption or the CO₂ emission over the last 50 kilometers or last hour traveled is displayed, as well as a curve of an average fuel consumption of which each point is an average over the fuel consumption over a preceding predetermined traveling distance, and a default fuel consumption, such as a manufacturer's value, which will generally be a straight line. The graphical display may provide additional fields for displaying credits or displaying the operation of auxiliary vehicle systems, or an overall evaluation value.

According to another aspect of the invention, the method further comprises the step of storing the obtained driving data and/or evaluation values. The samples collected from a controller area network of the vehicle may be stored, or average driving data may be stored, or both. The stored driving data may later be used as reference driving data in the form of past-driving data. Information associated with the driving data, such as the traveling distance at which the driving data was recorded, or road section properties may be stored together with the driving data. Of the stored evaluation values, an overall evaluation value may be formed and provided to the driver.

From such an overall evaluation value, the driver may learn how economic his driving was over a predetermined past-driving distance or driving time interval. Providing such an overall evaluation value to the driver may motivate the driver to improve the economy of his driving, i.e. reduce the fuel consumption. The evaluation value may be provided to the driver in written form on a display, e.g. in the form of a success level ("beginner", "advanced", "champion") or in the form of symbols displayed on a display or in audible form, e.g. as a sound played back at the end of a traveled route. The obtained driving data or the evaluation values may be stored only temporary in a memory such as a random access memory (RAM), or they may be stored more permanently on a permanent memory, such as a hard drive or a flash memory.

In another embodiment of the invention the operation of auxiliary vehicle systems is detected, and driving data associated with said auxiliary systems is provided to the driver. Auxiliary vehicle systems may for example be the air conditioning system of a vehicle, a heating system of the vehicle, such as seat heating, heating of the windshield or other windows in the vehicle, heating of mirrors, and the like. Such auxiliary vehicle systems contribute to the fuel consumption and CO₂ emission of the vehicle. Accordingly, driving data associated with these auxiliary systems is provided to the driver. As an example, it may be displayed on a display which auxiliary systems are operating and how much they contribute to the fuel consumption or CO₂ emission, e.g. as an absolute value or as a percentage. The driver of the vehicle is thus provided with useful information that enables him to decrease the fuel consumption of the vehicle, e.g. by switching off auxiliary vehicle systems having a large contribution to the fuel consumption.

In yet another embodiment of the invention a road section is detected on which the vehicle is traveling, and driving data and/or evaluation values obtained for said road section are assigned to said road section, and the assigned driving data and/or evaluation values are stored. A road section may for example be detected using a GPS system or other systems, such as vehicle sensors as described above. Detecting a road section may for example mean that it is detected that the road section is a highway section or a small road inside the city or the like, or it may be detected that the road section has a particular incline. When the vehicle is traveling on the road section, driving data is collected, and evaluation values are obtained. These are then assigned to the traveled road section and stored. The storing occurs in such a way that the assignment is not lost, e.g. by storing the driving data and/or evaluation values together with a road section designator, or together with a parameter characterizing the road section, or the like. As an example, fuel consumption obtained when traveling on a highway road section is stored for several highway road sections, and from the stored data, an overall fuel consumption for highway sections may be obtained. As another example, the fuel consumption is stored together with the incline of a particular road section, as a result of which a database is obtained with data associating fuel consumption with the incline of a road section. Such data may for example be used as reference driving data. Furthermore, the fuel consumption for a particular route may be stored and provided as reference driving data. When a driver frequently travels the same route, he can optimize his fuel consumption on this route by comparing his fuel consumption for a route section to the reference fuel consumption for the same section. Advantageously, a route from a starting point to a destination is determined taking into account stored evaluation values and/or driving data, the route being provided to the driver. Taking the stored driving data into account, a fuel-consumption-optimized route can be provided to the driver. As the fuel consumption for specific road sections of the particular vehicle is known, a route with an optimized fuel consumption can be determined very precisely. The route determination may also take stored evaluation values which were assigned to road sections into account. These evaluation values can indicate how economic a driver drives the vehicle on particular road sections. The driver may for example perform better on some road sections, whereas he may perform worse than a reference on others. Accordingly, taking the stored evaluation values into account when determining a route, a route can be provided to the driver that is optimized for fuel consumption for the particular driver and the particular vehicle.

According to another aspect of the invention, a warning is issued to the driver if an evaluation value meets a predetermined criterion. Such a warning may either be audible in form of a sound or in form of speech, or visible, in form of a symbol or the like displayed on a display. As an example, a warning is issued if the fuel consumption or the CO₂ emission of the vehicle rise above a certain threshold value. The driver can thus be warned of uneconomic driving. This may for example be the case for a take-off with very high acceleration, such as a racing start, or when driving in low gear at high revolutions. Preferably, a warning is issued if it is determined that the acceleration of the vehicle is above a predetermined threshold acceleration.

According to a preferred embodiment, the driving data and/or evaluation values are stored for an individual driver on a data carrier. The data carrier may be internal to the system providing the driving data, such as a hard drive, or it may be a removable device, such as a memory card, a USB stick, a CD/DVD, and the like. That way, when the driver of the vehicle changes, each driver can access their own individually stored evaluation values. On the same data carrier, the driving data and/or evaluation values of multiple drivers may be stored, and may be accessed by using a driver identification, such as a number or a name, and optionally, a password or the like may be used in order to protect the stored data against misuse. Other systems may already be provided in the vehicle identifying the driver of the vehicle. Data from such a system may then be used to access the evaluation values and/or driving data stored on said data carrier. Systems for identifying the driver of the vehicle are known in the art and will not be discussed in more detail here.

According to another aspect of the invention, the driving data and/or evaluation values are wirelessly transmitted to a server. Such a transmission may for example occur through a wireless local area network, a wireless telephone service, such as the short message service, or other wireless data transfer protocols, such as Bluetooth or the like. An alternative way of transferring the driving data and/or evaluation values to a server is to manually transport said data to the server using a removable data carrier as described above. The driving data and/or evaluation values transmitted to the server may then be used for a range of things. They may be used in an internet competition in which drivers compete for the most economic driving, the competition being performed e.g. by comparing evaluation values obtained by different drivers using the same type of vehicle. The driving data and/or evaluation values transmitted to the server may also be used by the driver to evaluate his driving performance, e.g. on a private web page. The driver may be provided with an interface, which allows him to access the recorded evaluation values and monitor the development of his driving, e.g. whether fuel economy is improving or worsening. Even more advantageously, the data may be used by the operator of a vehicle fleet. The vehicles of the vehicle fleet may transmit their driving data and/or evaluation values to a server on which the economy of particular vehicles and the quality of economical driving of particular drivers can be evaluated. Thus, the operator of the vehicle fleet has the possibility of shutting down vehicles with poor fuel economy or of determining drivers that drive uneconomically. These may then be trained for economic driving. It is thus very advantageous to transmit the driving data and/or evaluation values that are obtained with the above-described method to a server. As an alternative, the driving data and/or evaluation values may be transferred to the server using a hardwired connection.

Furthermore, a system is provided for providing driving data to a driver of a vehicle comprising a data supply unit supplying driving data of the vehicle, the driving data comprising at least fuel consumption of the vehicle or CO₂ emission of the vehicle, storage means storing reference driving data, an evaluation unit performing an evaluation of the driving data obtained from the data supply unit based on a comparison of the obtained driving data to the reference driving data, wherein an evaluation value is obtained, and a display unit providing the driving data, reference driving data and the evaluation value to the driver of the vehicle. Evaluation values are provided to the driver in the form of credits displayed as graphical symbols on the display unit. The display unit may be in the form of a display, such as an LCD display, displaying the driving data, reference driving data and the evaluation values. Preferably, the data supply unit is the controller area network of the vehicle. The controller area network of the vehicle can supply driving data to the evaluation unit without additional costs. Alternatively, the data supply unit may acquire driving data directly from sensors, such as a fuel flow sensor, a vehicle speed sensor, and the like. The storage means preferably comprise memory portions in which past-driving data is stored, memory portions in which default driving data is stored, and memory portions in which evaluation values are stored. These memory portions do not need to be within the same memory, they may be provided on different types of memory, such as in a random access memory, on a hard drive or on a flash memory, such as a memory card or a memory stick. The default driving data may for example be stored on an internal hard drive of the system, whereas the past-driving data and evaluation values are stored on a memory card, which can be removed from the system, so that this data may be used at a different place, e.g. in a home computer. Furthermore, storage means providing map data may be provided, e.g. in the form of a CD or a DVD. According to another embodiment, all the memory portions are comprised on the same data carrier, preferably an internal hard drive.

According to another aspect of the invention, the system furthermore comprises a processing unit for averaging driving data supplied by the data supply unit over a predetermined driving time interval and/or over a predetermined driving distance. Preferably, more than one average is calculated by the processing unit, e.g. an average for a short period of time, an average for a medium driving distance, e.g. 1,000 km, and a long time/distance average. The processing unit may calculate linear averages or weighted averages, the weighted averages may take other information such as vehicle data or route information into account.

The system may further comprise a sensor unit providing sensor data being used in a processing or in the evaluation of the obtained driving data. The driving data may for example be adjusted in the processing unit or in the evaluation unit. Preferentially, sensors are provided in the sensor unit that measure quantities which are related to fuel consumption of the vehicle. Such sensors may comprise a weight sensor, a velocity sensor, an engine temperature sensor, an RPM meter and the like. Preferably, the sensor unit comprises a GPS sensor providing an altitude of a position of the vehicle, wherein the driving data is adjusted based on changes of altitude with vehicle position. The GPS sensor may for example determine the altitude and position of the vehicle for two vehicle positions, and can thus calculate the incline of the route section between the two vehicle positions. As mentioned before, driving up an incline generally increases fuel consumption, and accordingly fuel consumption may be adjusted so that it can be better compared to reference driving data, whereby a meaningful evaluation becomes possible. The system for providing driving data to a driver of the vehicle may furthermore be formed so as to perform any of the above-described methods.

Furthermore, a computer program product that can be loaded into the internal memory of a computer is provided, said product comprising software code portions for performing any of the above-mentioned methods when the product is executed. The product is preferably provided on a data carrier. The above-described methods may be implemented as software running on a microprocessor of a vehicle navigation system.

The foregoing and other features and advantages of the invention will become further apparent from the following detailed description of preferred embodiments, read in conjunction with the accompanying drawings.

### Brief Description of the Drawings

Fig. 1 shows a schematic diagram of an embodiment of a system for providing driving data to a driver of a vehicle.
Fig. 2 shows a flow diagram of an embodiment of a method of providing driving data to a driver of a vehicle.
Fig. 3 shows a schematic diagram of driving data, reference driving data and evaluation values displayed on a display.
Fig. 4 shows a flow diagram of an embodiment of a method of providing driving data to a driver of a vehicle, in which evaluation values, additional evaluation values and overall evaluation values are provided to the driver.
Fig. 5 shows a flow diagram of another embodiment of a method of providing driving data to a driver, in which driving data is stored and used for route calculation.

### Detailed Description of the Presently Preferred Embodiments

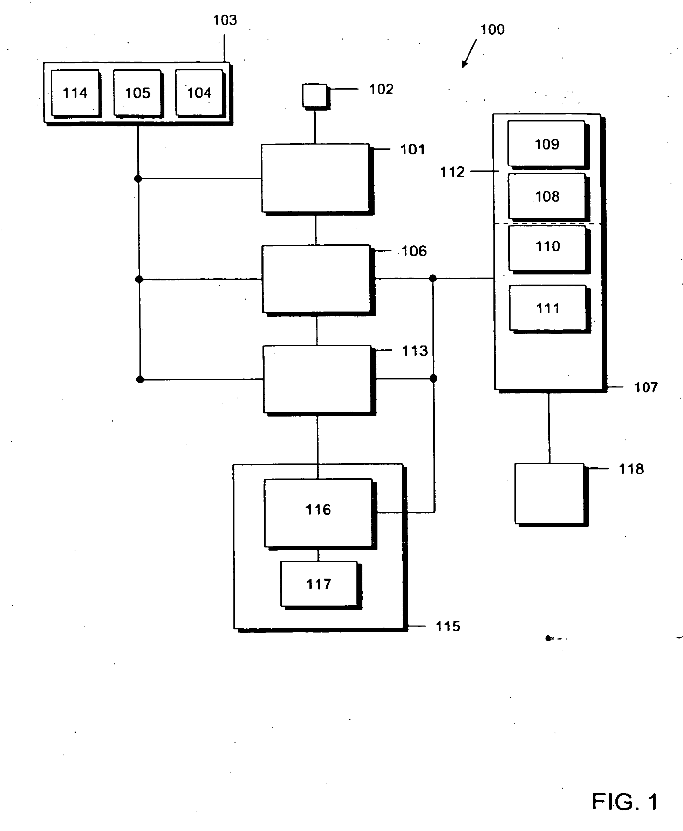

Fig. 1 shows a system for providing driving data to a driver of a vehicle. The system comprises a data supply unit 101, which supplies driving data obtained over the controller area network of the vehicle (CAN). A fuel consumption sensor 102, which may for example be part of a fuel injection system, is connected to the data supply unit 101, e.g. by the CAN, and provides information about fuel consumption, e.g. the fuel flow in units of microliter per second. Further sensors, such as the sensors comprised in the sensor unit 103, may be connected to a controller area network, and may provide the data supply unit 101 with data. Such sensors may for example be an engine temperature sensor 104, or a velocity sensor 105 providing the velocity of the vehicle, or an engine revolution counter, a vehicle weight sensor, a tire pressure sensor and the like. Sensor unit 103 is just an organizational unit, and the sensors comprised in the sensor unit may be located at appropriate locations on the vehicle. In the embodiment of Fig. 1 the data supply unit 101 provides the driving data in the form of a vehicle fuel consumption to the processing unit 106. The vehicle fuel consumption is obtained by the processing unit 106 at a predetermined sampling rate, and the processing unit averages over a predetermined amount of time and/or driving distance. The processing unit 106 may for example average the fuel consumption over a second, which yields an almost instantaneous value for fuel consumption, or it may average over five minutes, 50 kilometers or much longer driving distances or time intervals. The processing unit 106 stores the driving data in the storage means 107, e.g. in a memory portion provided for storing past-driving data 108. In said memory portion the driving data may be stored directly, or averages calculated by the processing unit 106 may be stored. When the processing unit 106 calculates an average over a longer driving distance or driving time, e.g. a fuel consumption average for the last 1,000 kilometers, it will access the storage means 107 and retrieve past-driving data 108 from the memory portion. Storage means 107 furthermore comprises memory portions for storing default driving data 109, memory portions for storing evaluation values 110 and a memory portion for storing map data 111. These memory portions do not need to be comprised in the same physical memory or on the same data carrier. The memory portions for the default driving data 109 and for the past-driving data 108 may for example be provided on a hard drive internal to the system for providing driving data 100, whereas the evaluation values 110 may be stored in a memory portion of a random access memory of the system 100, and the map data 111 may be provided on memory portions of a CD/DVD inserted into a CD/DVD drive of the system 100. As another example, the default driving data 109 may be provided on a read only memory programmed by the vehicle manufacturer, whereas the past-driving data 108 and the evaluation values 110 are stored on a flash memory, and the map data 111 is provided on a hard drive internal to the system 100. In the depicted embodiment in Fig. 1 the reference data 112 comprises default driving data 109 and past-driving data 108.

The processing unit 106 furthermore obtains information about the vehicle velocity. Vehicle velocity is measured with the velocity sensor 105, and may be obtained directly by the processing unit 106 or by means of the data supply unit 101, e.g. over the CAN bus. The processing unit 106 uses the velocity of the vehicle to transform the fuel consumption into units of liters/ 100 kilometers. This transformation may be performed before or after averaging of the fuel consumption. The processing unit 106 then provides the fuel consumption to the evaluation unit 113. The evaluation unit 113 furthermore obtains reference data 112 by accessing the storage means 107, e.g. in form of default driving data 109 or of past-driving data 108. The evaluation unit 113 obtains furthermore vehicle position data from a GPS sensor 114. The GPS sensor 114 may be part of a vehicle navigation system, into which the system 100 for providing driving data may be integrated. The position data from the GPS sensor 114 also comprises information about the altitude at a particular vehicle position. If the vehicle is driving up a slope, the evaluation unit can then, based on the change in altitude with vehicle position, determine the incline of the slope. The evaluation unit 113 then evaluates the fuel consumption based on a comparison of the fuel consumption with the reference data 112 taking into account the determined incline. For example, a reference may be provided for how fuel consumption changes with incline. Based on this information the evaluation unit 113 may then adjust the fuel consumption provided by the processing unit 106, and the adjusted fuel consumption is then compared to a reference value, e.g. a default fuel consumption value or a fuel consumption value of the past. The adjustment is advantageous, since fuel consumption generally increases with increasing incline, and thus, a comparison with a default fuel consumption for a flat stretch of road would be meaningless. Alternatively, reference data for certain inclines may be provided. That way an adjustment of the obtained fuel consumption would not be necessary. A fuel consumption obtained for determined incline of 8% could for example be directly compared to a reference fuel consumption for an incline of 8%. In both cases a result is obtained in the form of an evaluation value. The evaluation value indicates whether the obtained fuel consumption is a good fuel consumption or a poor fuel consumption compared to the reference fuel consumption. Such an evaluation value may be obtained at predetermined driving distances or time intervals, e.g. every ten minutes or every 50 meters or 50 kilometers. It is also possible to obtain evaluation values frequently, say every 10 seconds, and average the evaluation values to obtain an average evaluation value. Evaluation values and driving data are then supplied to the data providing unit 115. They do not necessarily have to be supplied simultaneously. The driving data may for example be provided after a driving distance of one kilometer, whereas an evaluation value is provided after a driving distance of 10 kilometers or 50 kilometers, or at the end of the route.

The data providing unit 115 may for example comprise a computing unit 116 and a display 117. The computing unit 116 accesses reference driving data 112, e.g. default driving data 109 or past-driving data 108. It may furthermore store the driving data of say the last 50 kilometers or last one hour driven. The computing unit 116 composes information comprising the reference driving data, the evaluation values and the obtained driving data and provides that information to the driver of the vehicle by means of the display 117. The display 117 may for example be an LCD display integrated into the dashboard of the vehicle, or it may be the display of an in-vehicle navigation system or multimedia system or a head-up display or the like. The data providing unit 115 may also comprise other means of providing the data to the driver, for example a head-up display or loudspeakers for providing the data in audible form.

Various modifications to the system 100 are possible. For example, means may be provided for detecting the operation of auxiliary vehicle systems, such as air conditioning or seat heating, and fuel consumption associated with these systems may also be provided on the data providing unit 115. Furthermore, means may be provided for obtaining additional evaluation values, e.g. based on a detection of the type of route driven or on driving conditions. The type of route driven may for example be determined using the GPS sensor 114, and driving conditions such as frequent acceleration and deceleration may be determined using a RPM-meter or an acceleration sensor. Also, further means may be provided for generating an overall evaluation value of the additional evaluation values and evaluation values obtained by the evaluation unit 113. The additional and overall evaluation values may then also be displayed on the display 117. Evaluation values, additional evaluation values and overall evaluation values can be stored in the storage means 107 at a memory portion for storing evaluation values 110. These may be used for different purposes. The evaluation values may for example be stored in association with route segments of a particular type, such as highways, small side streets, or similar segments. If the system 100 is part of a navigation system with the capability of providing a route from a starting point to a destination, the route may be calculated taking evaluation values 110, and/or past-driving data 108 into account. The evaluation values for example indicate on which type of road segment the driver of the vehicle achieves a good fuel consumption. Accordingly, a route may be calculated optimized for good fuel consumption for the particular driver. To that end, the past-driving data 108 and the evaluation values 110 may be stored individually for each driver. They may be accessed e.g. by a password, or an identification number, or other means, e.g. identification means provided in the car key.

Furthermore, the evaluation values 110 and/or past-driving data 108 may be transmitted to e.g. a server by using the data exchange unit 118. Data exchange unit 118 may for example be in the form of a wireless network card for establishing a wireless connection with a server, yet it may be formed to establish a Bluetooth connection, an infrared connection, or any other suitable connection with a server. It may also be in the form of a removable data carrier, such as a CD/DVD or disk driver, or a drive for a memory card, such as compact flash, secure digital, memory stick, or other memory cards, or a USB memory stick.

The transferred past-driving data 108 and/or evaluation values 110 can then be used for a range of applications. A user may for example access the past-driving data and evaluation values to obtain a detailed statistic about his past-driving, e.g. in form of a web page, or may use the evaluation values to participate in a competition, e.g. an internet-based competition for economic drivers. By providing the evaluation values 110 in such a way, the driver of the vehicle is motivated to drive more economically, and thus lower the fuel consumption of the vehicle. This is advantageous for both the driver himself and the environment.

Furthermore, the data exchange unit 118 may transfer the past-driving data and the evaluation values to a server of an operator of a vehicle fleet. The operator may then access the past-driving data and the evaluation values of the vehicles of his fleet. Thus, he may determine which of the vehicles of the fleet operate economically, i.e. consume little fuel, and he may evaluate the driving performance of his drivers, i.e. which drivers drive economically. By providing the operator with the past-driving data and the evaluation values, the system of the embodiment of the present invention enables the operator to substitute vehicles with a high fuel consumption in his fleet and to advice his drivers to operate the vehicles more economically, and thus helps to reduce fuel consumption and CO₂ emission.

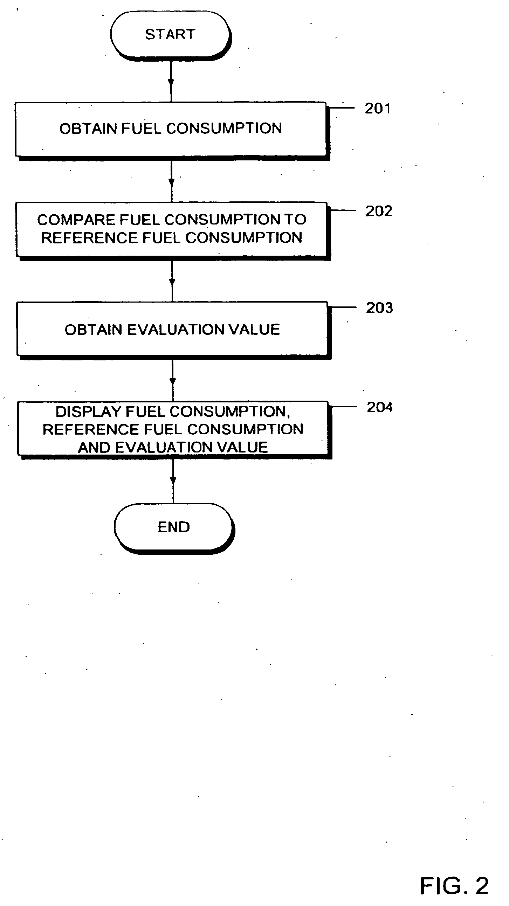

Fig. 2 shows a flow diagram of an embodiment of a method of providing driving data to the driver of a vehicle. In a first step 201, fuel consumption of the vehicle is obtained. Fuel consumption may for example be obtained by accessing the CAN of a vehicle and reading out values for fuel flow, which are provided by the CAN. Fuel consumption may also be obtained by sampling a signal from a sensor designated for measuring fuel consumption. Besides obtaining fuel consumption, CO₂ emission may also be obtained in step 201. CO₂ emission may for example be obtained by deriving the CO₂ emission from fuel consumption, which is possible if the type of fuel burnt is known. Yet CO₂ emission may also be obtained by a sensor dedicated to measure CO₂ emission. The obtained fuel consumption may then be processed, e.g. by averaging over a time spam or over a driven distance, and by converting the value obtained for fuel flow into values for fuel consumption, e.g. in units of litres/100 km or miles/gallon or by adjusting the obtained fuel consumption based on data obtained from other vehicle sensors, such as a GPS sensor, a vehicle weight sensor, or the like.

The obtained fuel consumption is then compared to reference fuel consumption in step 202. Reference fuel consumption may for example be a default fuel consumption, which is a fuel consumption that the manufacturer of the vehicle has determined or that any other information source provides, such as an automobile club or the like. The default fuel consumption may for example be the average fuel consumption of all similar types of vehicles, i.e. a similar manufacturer and model. Reference fuel consumption can also be derived from past-driving data, such as the fuel consumption over the past 1,000 kilometers driven or the average fuel consumption over the life of the vehicle. Yet in another embodiment the reference fuel consumption is the average fuel consumption obtained in the past for road segments similar to the road segment the vehicle is presently traveling on. That means that if the vehicle is presently traveling on a highway, which may be determined from a GPS sensor in combination with map data, the obtained fuel consumption will be compared to past fuel consumption obtained during highway travel. An accurate evaluation of the present fuel consumption may for example not be possible if the obtained fuel consumption for a highway is compared to a default fuel consumption, as it will in general be lower, and accordingly it cannot be determined whether the obtained fuel consumption is good or poor. The fuel consumption obtained when driving uphill would always be poor when compared to a default or a longer distance average fuel consumption.

Based on the comparison of step 202, an evaluation value is obtained in step 203. The evaluation value generally indicates whether the obtained fuel consumption is a good fuel consumption or a poor fuel consumption. There are several ways of obtaining an evaluation value based on the comparison of step 202, and it is not important how the evaluation value is obtained as long as it reflects the fuel consumption performance. The evaluation value may for example take on the values of + 1 and -1, with + 1 indicating a good fuel consumption, e.g. better than the reference fuel consumption, and -1 indicating poor fuel consumption, e.g. worse than the reference fuel consumption. As an example, the evaluation value may be obtained by the following routine: taking the difference between the reference fuel consumption and the obtained fuel consumption, wherein if the difference is above or below a predetermined threshold value, a value of + 1 or -1 is assigned to the evaluation value, respectively. Say for the last 50 km of driving the average fuel consumption was eight liters per 100 kilometers, whereas a reference fuel consumption for a similar stretch of road is nine liters per 100 kilometers. The difference value of 1 lies above a predetermined threshold value of 0.5, as a result of which a value of 1 is assigned to the evaluation value. It should be understood that this is only a very simple example of how an evaluation value can be obtained based on a comparison between obtained fuel consumption and reference fuel consumption, and that other, more complex ways to obtain an evaluation value are within the scope of the present invention.

In a next step 204 the fuel consumption, reference fuel consumption and evaluation values are provided to the driver of the vehicle. The reference fuel consumption provided to the driver in step 204 does not necessarily have to be the same as the reference fuel consumption used for the comparison in step 202. As an example, a fuel consumption associated with a particular type of road is used for the comparison of step 202, whereas the average fuel consumption over the last 1,000 kilometers is provided in step 204. The evaluation value can be provided in visible or audible form to the driver. Preferably, the evaluation values obtained during traveling are provided to the driver in the form of graphical objects displayed on a screen. For example, every time an evaluation value of + 1 is obtained a green square is displayed on the display, whereas when an evaluation value of -1 is obtained a red square is displayed on the display. These squares may then accumulate corresponding to positive and negative credits. An evaluation value may for example be obtained every 50 kilometers. If a value of + 1 is obtained, another positive credit is added, whereas if a value of -1 is obtained, another negative credit is added. In the case where the fuel consumption is within a predetermined range around the reference fuel consumption, an evaluation value of 0 or no evaluation value may be obtained, and accordingly, no credit is added to the positive or negative credits. The adding of a positive or negative credit may also be indicated with a particular sound, so that the driver is directly informed of his driving performance regarding fuel consumption or CO₂ emission. During driving or after reaching the destination, the driving instantly obtains an evaluation of his driving performance of the last traveled route. He may then accumulate further evaluation values in form of credits over his next journey, or he may manually reset the system to start accumulating credits over again. With such a method the driver of the vehicle is not only informed instantly about his driving performance, but he is also motivated to collect as many positive credits as possible, as a result of which fuel consumption is reduced as well as CO₂ emission.

Other embodiments of the method are possible. Evaluation values may for example be displayed not accumulative, but "live", meaning that the value is graphically displayed and updated frequently, every second or every five seconds. As mentioned before and as will be explained in more detail later, further factors obtained from other vehicle sensors may be accounted for when forming the evaluation value, and the obtained fuel consumption may be adjusted using data obtained from these sensors.

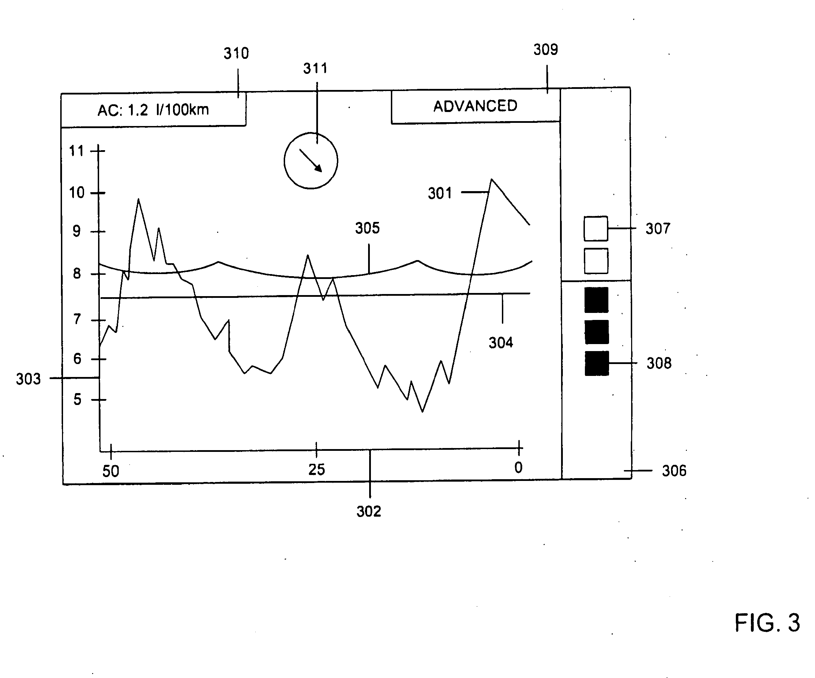

Fig. 3 shows a schematic drawing of information provided on a display, such as the display 117 of Fig. 1, of a system for providing driving data to a driver of a vehicle. In Fig. 3, fuel consumption as well as reference fuel consumption and evaluation values are shown. The fuel consumption 301 of the vehicle is shown as a function of distance 302, here for a range of the last 50 kilometers driven. While the vehicle is driving, a new data point of fuel consumption may be added on the right hand side of curve 301, wherein the curve is scrolled to the left side of the display. A new data point may for example correspond to driving data collected and averaged over a driving distance of one kilometer. The y-axis 303 indicates the quantity of fuel consumption in liter per 100 kilometers. As an alternative, the graph may also display fuel consumption versus time, or CO₂ emission versus time or versus distance. In the case of CO₂ consumption, the y-axis 303 may be in units of grams CO₂ per kilometer. Curve 304 indicates a default fuel consumption, e.g. a value given by the manufacturer, here 7.5 liters per 100 kilometers. The curve 305 is an average fuel consumption, e.g. an average over the last 500 kilometers. This average will fall below the default fuel consumption 304 when traveling long distances on a highway, whereas it will in general lie above line 304 for driving within a city. Other averages of past-driving data may also be provided, for example over longer or shorter time intervals or driving distances. From the three curves 301, 304 and 305 of Fig. 3 a driver of a vehicle already gets and indication of how economically he is driving at any given moment. Yet in specific situation such as when driving up a hill or when accelerating, the curve 301 may indicate an increased fuel consumption, even though the driver is generally driving economically and the increased fuel consumption cannot be avoided. In these cases the curve 301 may be adjusted, taking into account additional data provided by sensors of the vehicle, or more appropriate reference data may be chosen. In order to give the driver a more appropriate indication of his driving performance, evaluation values are provided in section 306 of the display. The evaluation values are provided in the form of positive credits 307 and negative credits 308. An evaluation value may for example be obtained every 50 kilometers, and the evaluation values are accumulated, so that the number of positive and negative credits increases with driving distance. For a given route the driver is thus provided with information regarding his driving performance in terms of fuel economy on said route. By providing an accumulative display of evaluation values a driver is motivated to collect as many positive credits 307 as possible, and he is thus motivated to improve fuel economy. Furthermore, an overall evaluation value is provided in field 309. In the embodiment depicted in Fig. 3 the overall evaluation value is provided in written form with different stages such as "beginner", "intermediate", "advanced", "professional". If on average a driver collects more positive than negative credits within a particular driving distance or driving time interval, his overall evaluation value may improve. For example, to obtain the overall evaluation value, evaluation values of the last 1,000 kilometers may be averaged. With an average value of 0 an overall evaluation value of "intermediate" may be assigned, whereas for an average evaluation value of 0.3 the overall evaluation value may be set to "advanced". By providing the overall evaluation value in field 309 the driver of the vehicle is further motivated to increase his economic driving performance, and thus increase his overall evaluation value. As a result, fuel consumption is reduced as well as CO₂ emission. The evaluation value and the overall evaluation value may furthermore be transferred to a server, e.g. by using a data exchange unit 118, and the driver may participate in a competition choosing the driver with the best fuel economy. In a further field 310 the operation of auxiliary vehicle systems is indicated. In the example of Fig. 3 field 310 indicates that the air conditioning (AC) of the vehicle is running. Furthermore, driving data associated with the vehicle system running is indicated, e.g. that the air conditioning system is contributing to the fuel consumption of the vehicle with 1.2 liters per 100 kilometers. The operation of other systems, such as a seat heating, a windshield heating, a rear window heating, and the like may be indicated in field 310. By providing the driver with information regarding the contribution on fuel consumption of auxiliary vehicle systems, the driver is enabled to selectively shut off particular auxiliary vehicle systems in order to conserve fuel. Without such an indication drivers are often not aware of the increased amount of fuel consumption caused by auxiliary systems. Furthermore, a trend indicator 311 is provided indicating changes in fuel consumption. For example after driving some time with relatively high fuel consumption, if fuel consumption starts to decrease, e.g. because the driver is trying to drive more economically, the trend indicator 311 indicates that the fuel consumption is starting to decrease. This is a further aid to the driver, as he can immediately see that his efforts to improve fuel consumption are successful. It should be noted that Fig. 3 is just an example of how driving data, reference data and evaluation values can be provided to the driver of a vehicle. The information may also be displayed in any other form, for example using bar graphs and the like, and is not restricted to the example of Fig. 3. Also, different units and scaling may be used for graphs, and evaluation values may be displayed accumulative or as a live indicator.

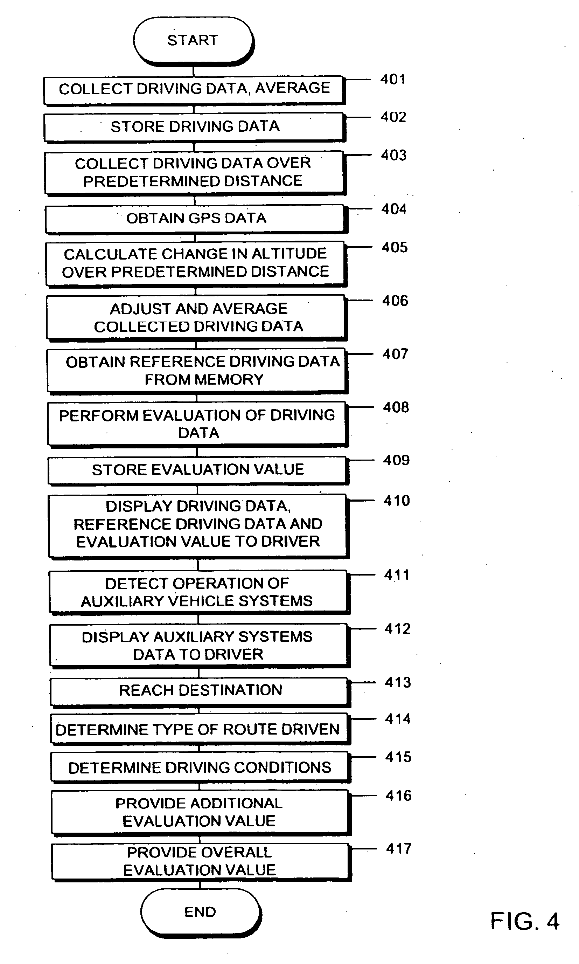

Fig. 4 shows a flow diagram of another embodiment of a method of providing driving data to a driver of a vehicle. In a first step 401, driving data is collected and averaged, e.g. fuel consumption or CO₂ emission is collected from the CAN of the vehicle. The driving data is then stored in step 402, e.g. using a hard drive internal to the system. Collecting and storing data, i.e. steps 401 and 402, may be performed all the time while driving. That way a database containing past-driving data is built up. In a next step 403 driving data is collected over a predetermined distance. The data may for example be collected over a stretch of 500 meters while driving uphill. In step 404, GPS data is obtained. The GPS data is preferably obtained for a number of positions along the predetermined distance and preferably contains altitude information. Based on the altitude information, the change in altitude over the predetermined distance is calculated in step 405, yielding the incline over said predetermined distance. In step 406 the collected driving data is then adjusted and averaged. The adjustment of the driving data may for example occur according to stored information associating driving data with changes in altitude over a distance. The system may for example know that when driving up a slope with a 5% incline, fuel consumption increases by 50%. The driving data in form of fuel consumption is then adjusted accordingly. It may be adjusted in such a way that it represents a fuel consumption that would occur when the vehicle would be driving under normal conditions on a flat stretch of road. In step 407 reference driving data is obtained from memory, such as the hard drive mentioned above. The reference driving data may for example be driving data that was stored in step 402, i.e. past-driving data. Based on a comparison between the driving data and the reference driving data an evaluation of the driving data is performed in step 408. As the driving data was adjusted in step 406, a meaningful comparison between the driving data and the reference driving data becomes possible. The evaluation of the driving data yields an evaluation value which is stored in step 409. The driving data, reference driving data and the evaluation value are provided to the driver in step 410, e.g. as graphical elements displayed on a display. In step 411 the operation of auxiliary vehicle systems, such as an air conditioning system is detected. In step 412, auxiliary systems data is displayed to the driver. Such data may comprise the fuel consumption or CO₂ emission that can be attributed to the auxiliary vehicle system. In step 413 the vehicle reaches its destination. In step 414 the type of route driven is then determined. It may for example be determined that the route was a short-distance route, e.g. by accessing a GPS sensor 114 or by accessing a temperature sensor 104. On short-distance drives the engine will not warm up completely, resulting in inefficient driving. This can be detected using said engine temperature sensor. Furthermore, driving conditions are determined in step 415. It may for example be determined that the vehicle was driven with frequent high accelerations and decelerations. In step 416 additional evaluation values are provided. These may be provided in form of positive or negative credits as described with respect to Fig. 3. For example, since it was determined that a short-distance route was driven, which generally results in poor fuel economy, a negative credit is added and displayed to the driver. Furthermore, since it was determined that the driver frequently accelerated strongly, a further negative credit may be added and displayed to the driver. Thus, the driver gets an immediate feedback that his driving performance in terms of economy was rather poor. As a result, an overall evaluation value provided to the driver in step 417 may change to a lower level, such as from "advanced" to "intermediate". In this respect the additional evaluation value may be treated the same as the evaluation values provided while driving. In fact the additional evaluation values may also be provided while driving, e.g. at predetermined driving distances, or after predetermined driving time intervals. Similarly, for a route driven without frequent accelerations and decelerations events an evaluation value in form of a positive credit may be accumulated and provided to the driver. The driver is thus provided with a precise and meaningful indication of his driving performance with respect to fuel consumption and CO₂ emission and is motivated to improve this performance, e.g. in order to advance his overall evaluation value 309.

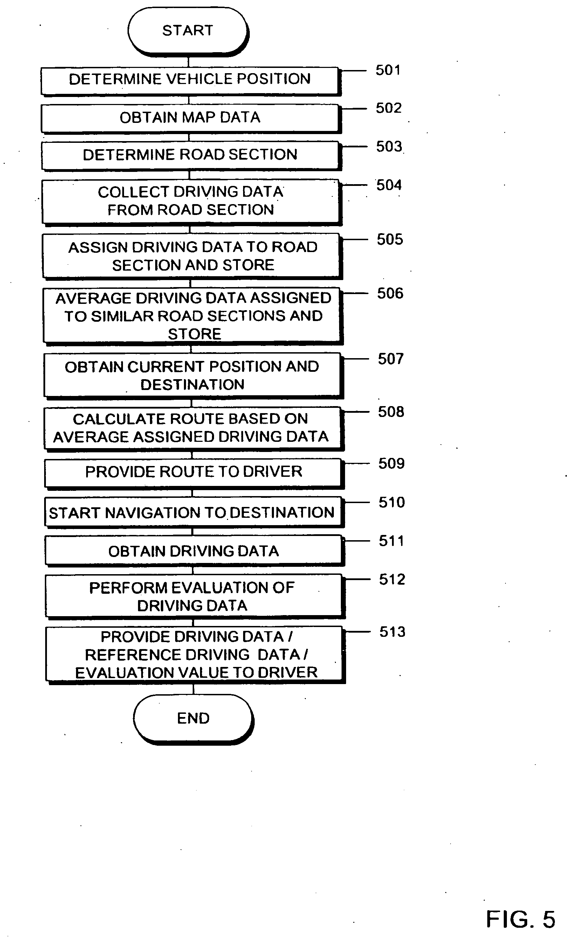

Fig. 5 shows a flow diagram of another embodiment of a method of providing driving data to a driver of a vehicle. In a first step 501 the vehicle position is determined, for example by using a GPS sensor 114. In a second step 502 map data, such as the map data 111, is obtained. Based on the map data and the vehicle position the road section on which the vehicle is traveling is determined in step 503. It may for example be determined that it is a highway road section or an inner city street, or an overland road, or it may be determined that it is a road section with a particular incline. Over said road section or part of said road section driving data is collected in step 504. A road section may for example be the highway section extending from one highway exit to the next, and while traveling along this road section data on the fuel consumption of the vehicle is obtained and collected. The driving data is then assigned to the road section and stored in step 505. The driving data may also be averaged before it is stored. The driving data is supposed to be stored in such a way that the association with the particular road section or road section property is not lost. The driving data may thus be stored together with the type of road section or the inclination of the road section or the like. Yet it may also be stored with an indicator indicating the particular road section, e.g. by an identification number or by GPS coordinates.

The driving data assigned to similar road sections is then averaged and stored in step 506. For example the fuel consumption for a highway section on which a particular traveling speed is allowed may be averaged and stored, or the fuel consumption on road sections with a particular incline are averaged and stored. Thus, a database can be built up comprising data associating road sections or road section properties with fuel consumption or CO₂ emission. In a next step 507 a current position of the vehicle and a destination is obtained. A destination may for example be entered by the driver or co-driver of the vehicle using a control element provided on a vehicle navigation system. In step 508 the navigation system then calculates a route from a current position to the destination taking into account the average assigned driving data. It may for example calculate a route optimized for fuel consumption, i.e. with minimal fuel consumption. By accessing the driving data stored in step 506 the vehicle navigation system has data available indicating a realistic fuel consumption of the vehicle on particular road sections. Accordingly, the system can provide a route that is optimized for fuel consumption for the particular vehicle. As mentioned before, evaluation values obtained for a particular road section may also be stored in step 506, or may be stored instead of the driving data. The route calculation in step 508 may then be based on the stored evaluation values or may at least take these values into account. This is an advantage if a driver drives uneconomically on particular road sections, which can then be avoided. A road section may be similar to a link in the geographic data file format, which connects two nodes. The driving data is then an attribute assigned to the link. The calculation of a route from data comprising nodes and links with assigned attributes is well-known in the art and will not be explained in more detail here.

The route is provided to the driver in step 509. In step 510, navigation to the destination starts. While driving to the destination, driving data is obtained in step 511. In step 512, an evaluation of the obtained driving data is performed. In step 513 the driving data, reference driving data and evaluation values are provided to the driver. The driver may have previously driven the same route, and driving data associated with the particular road sections of the route may be stored in the past-driving data. Particularly if the driver often drives the same route, such as when driving to work and back, the driver can then optimize his fuel consumption along said route, since the system provides him with reference data for said particular route. To that end, an additional evaluation value may be provided to the driver indicating whether his performance in terms of fuel economy was better or worse compared to the last time he traveled said route, or compared to the average for said route. The method and the system of the present invention thus provide the driver of the vehicle with the possibility to optimize their fuel consumption, as the driver is provided with a meaningful evaluation of his driving performance. Particularly for frequently traveled routes, high quality reference data is provided based on which the driver of the vehicle can minimize fuel consumption, resulting in a minimization of fuel costs and CO₂ emission.

It should be clear the above-described embodiments are only examples, and that features may be combined to form new embodiments. The steps of the described embodiments of the method may be frequently repeated or performed in parallel. A vehicle position may for example be determined while driving data is collected.

As can be seen from the above description, the system and method of the present invention provide the driver of a vehicle with meaningful information regarding driving data, particularly fuel consumption or CO₂ emission by means of evaluation values. Providing the evaluation values enable the driver of the vehicle to improve fuel consumption and reduce CO₂ emission. Displaying evaluation values to a driver is a great advantage over simply providing absolute values of fuel consumption, since these generally do not allow a driver to judge whether he is driving economically or not.

## Claims

1. Method of providing driving data to a driver of a vehicle comprising the step of
- obtaining driving data of the vehicle, comprising at least fuel consumption 301) of the vehicle or CO₂ emission of the vehicle,
- performing an evaluation of the driving data (301)
**characterized in that** the evaluation is based on a comparison between the driving data (301) and reference driving data (304, 305), wherein an evaluation value (307, 308) is obtained,
and by further comprising the step of
- providing the driving data (301), reference driving data (304, 305) and the evaluation value (307, 308) to the driver of the vehicle, wherein evaluation values are provided to the driver in the form of credits displayed as graphical symbols on a display unit (117).

2. Method according to claim 1, **characterized in that** the driving data is obtained by collecting driving data over a predetermined driving distance or over a predetermined driving time interval and averaging the collected driving data.

3. Method according to claim 1 or 2, **characterized in that** the driving data is obtained by accessing the controller area network of the vehicle.

4. Method according to any of the preceding claims, **characterized in that** the reference data (112) comprises default driving data (109) and/or past-driving data (108).

5. Method according to any of the preceding claims, **characterized in that** an incline of a road section the vehicle was travelling on when the driving data was collected is taken into account when performing an evaluation of the driving data.

6. Method according to claim 5, **characterized in that** the incline of the road section is obtained by determining differences in altitude using a position determination sensor (114).

7. Method according to any of the preceding claims, **characterized in that** one or a combination of the following vehicle data is obtained and taken into account for the evaluation of the obtained driving data: vehicle velocity, distance travelled by vehicle, wheel sensor data, revolution speed of vehicle engine, engine temperature, tire pressure, vehicle payload.

8. Method according to any of the preceding claims, **characterized by** further comprising the step of providing additional evaluation values based on the type of route travelled and/or driving conditions.

9. Method according to any of the preceding claims, **characterized by** further comprising the step of storing the obtained driving data and/or evaluation values.

10. Method according to claim 9, **characterized by** further comprising the steps of forming an overall evaluation value of said stored evaluation values and of providing the overall evaluation value (309) to the driver.

11. Method according to any of the preceding claims, **characterized in that** a positive credit is provided if the evaluation value is above a predetermined threshold value, whereas a negative credit is provided if the evaluation value is below a predetermined threshold value.

12. Method according to any of the preceding claims, **characterized in that** the credits are accumulated.

13. Method according to any of the preceding claims, **characterized in that** a negative credit is provided if it is determined that the vehicle has travelled a distance shorter than a predetermined distance.

14. Method according to any of the preceding claims, **characterized in that** a positive credit is provided if it is determined that an acceleration higher than a predetermined threshold acceleration and/or a breaking stronger than a predetermined deceleration did not occur over a predetermined travelling distance.

15. Method according to any of the preceding claims, **characterized in that** driving data over a predetermined travelled distance and/or a moving average over a predetermined travelled distance and/or a default driving data are provided to the driver in form of a graphical display of a graph.

16. Method according to any of the preceding claims, **characterized by** further comprising the steps of detecting the operation of auxiliary vehicle systems and providing driving data associated with said auxiliary systems to the driver.

17. Method according to any of the preceding claims, **characterized by** further comprising the steps of detecting a road section on which the vehicle is travelling, assigning driving data and/or evaluation values obtained for said road section to said road section, and storing the assigned driving data and/or evaluation values.

18. Method according to claim 9 or 17, **characterized by** further comprising the steps of determining a route from a starting point to a destination taking into account stored evaluation values and/or driving data, and of providing the route to the driver.

19. Method according to any of the preceding claims, **characterized in that** if an evaluation value meets a predetermined criterion, a warning is issued to the driver.

20. Method according to claim 19, **characterized in that** the warning is issued if it is determined that the acceleration of the vehicle is above a predetermined threshold acceleration.

21. Method according to any of the preceding claims, **characterized in that** the driving data and/or evaluation values are stored for an individual driver on a data carrier.

22. Method according to any of the preceding claims, **characterized in that** the driving data and/or evaluation values are wirelessly transmitted to a server.

23. System for providing driving data to a driver of a vehicle, comprising:
- a data supply unit (101) supplying driving data of the vehicle, the driving data comprising at least fuel consumption of the vehicle or CO₂ emission of the vehicle
- storage means (107) storing reference driving data,
- an evaluation unit (113) performing an evaluation of the driving data obtained from the data supply unit (101),
**characterized in that** the evaluation is based on a comparison between the obtained driving data and the reference driving data, wherein an evaluation value is obtained, and by further comprising
- a display unit (115) providing the driving data, reference driving data and the evaluation value to the driver of the vehicle, wherein evaluation values are provided to the driver in the form of credits displayed as graphical symbols on the display unit (117).

24. System according to claim 23, **characterized in that** the storage means (107) comprise memory portions in which past-driving data (108) is stored, memory portions in which default driving data (109) is stored, and memory portions in which evaluation values (110) are stored.

25. System according to claim 23 or 24, **characterized in that** the data supply unit (101) comprises the controller area network of the vehicle.

26. System according to any of claims 23-25, **characterized by** further comprising a processing unit (106) averaging driving data supplied by the data supply unit (101) over a predetermined driving time interval and/or over a predetermined driving distance.

27. System according to any of claims 23-26, **characterized by** further comprising a sensor unit (103) providing sensor data being used in a processing or in the evaluation of the obtained driving data.

28. System according to claim 27, **characterized in that** the sensor unit (103) comprises a GPS sensor (114) providing an altitude of a position of the vehicle, wherein changes of altitude with vehicle position are taken into account for performing the evaluation of the driving data.

29. System according to any of claims 23-28, **characterized in that** the system is formed so as to perform a method according to any of claims 1-22.

30. Computer program product that can be loaded into the internal memory of a computer, said product comprising software code portions for performing any of the methods of claims 1-22 when the product is executed.

## Patentansprüche

1. Verfahren zum Bereitstellen von Fahrinformationen für einen Fahrer eines Fahrzeugs, umfassend die Schritte:
- Gewinnen von Fahrinformationen des Fahrzeugs, welche zumindest einen Kraftstoffverbrauch (301) des Fahrzeugs oder eine CO₂ Emission des Fahrzeugs umfassen,
- Ausführen einer Auswertung der Fahrinformationen (301),
**dadurch gekennzeichnet, dass** die Auswertung auf einem Vergleich zwischen den Fahrinformationen (301) und Referenzfahrinformationen (304, 305) basiert, wobei ein Auswertungswert (307, 308) gewonnen wird,
und ferner umfassend den Schritt:
- Bereitstellen der Fahrinformationen (301), der Referenzfahrinformationen (304, 305) und des Auswertungswertes (307, 308) für den Fahrer des Fahrzeugs, wobei
Auswertungswerte dem Fahrer in Form von Guthaben bereitgestellt werden, welche als graphische Symbole auf einer Anzeigeeinheit (117) angezeigt werden.

2. Verfahren nach Anspruch 1, **dadurch gekennzeichnet, dass** die Fahrinformationen durch Sammeln von Fahrinformationen über eine vorbestimmte Fahrentfernung oder über eine vorbestimmte Fahrzeitdauer und ein Mitteln der gesammelten Fahrinformationen gewonnen werden.

3. Verfahren nach Anspruch 1 oder 2, **dadurch gekennzeichnet, dass** die Fahrinformationen durch Zugreifen auf das Steuernetz des Fahrzeugs gewonnen werden.

4. Verfahren nach einem der vorhergehenden Ansprüche, **dadurch gekennzeichnet, dass** die Referenzinformationen (112) Vorgabefahrinformationen (109) und/oder vergangene Fahrinformationen (108) umfassen.

5. Verfahren nach einem der vorhergehenden Ansprüche, **dadurch gekennzeichnet, dass** ein Ansteigen eines Straßenabschnitts, auf dem sich das Fahrzeug bewegt hat, als die Fahrinformationen gesammelt wurden, berücksichtigt wird, wenn eine Auswertung der Fahrinformationen durchgeführt wird.

6. Verfahren nach Anspruch 5, **dadurch gekennzeichnet, dass** die Neigung des Straßenabschnitts durch Bestimmen von Höhenunterschieden unter Verwendung eines Positionsbestimmungssensors (114) gewonnen wird.

7. Verfahren nach einem der vorhergehenden Ansprüche, **dadurch gekennzeichnet, dass** eine der oder eine Kombination aus den folgenden Fahrzeuginformationen gewonnen wird und für die Auswertung der gewonnen Fahrzeuginformationen berücksichtigt wird: eine Fahrzeuggeschwindigkeit, eine von dem Fahrzeug zurückgelegte Entfernung, eine Radsensorinformation, eine Drehzahl eines Fahrzeugmotors, eine Motortemperatur, ein Reifendruck, eine Fahrzeugnutzlast.

8. Verfahren nach einem der vorhergehenden Ansprüche, **dadurch gekennzeichnet, dass** das Verfahren ferner den Schritt eines Bereitstellens von zusätzlichen Auswertungswerten auf der Grundlage der Art der zurückgelegten Route und/oder Fahrzuständen umfasst.

9. Verfahren nach einem der vorhergehenden Ansprüche, **dadurch gekennzeichnet, dass** das Verfahren ferner den Schritt eines Speicherns der gewonnen Fahrinformationen und/oder Auswertungswerte umfasst.

10. Verfahren nach Anspruch 9, **dadurch gekennzeichnet, dass** das Verfahren ferner die Schritte eines Bildens eines gesamten Auswertungswertes der gespeicherten Auswertungswerte und eines Bereitstellens des gesamten Auswertungswertes (309) für den Fahrer umfasst.

11. Verfahren nach einem der vorhergehenden Ansprüche, **dadurch gekennzeichnet, dass** ein positives Guthaben bereitgestellt wird, wenn der Auswertungswert über einem vorbestimmten Schwellenwert ist, wohingegen ein negatives Guthaben bereitgestellt wird, wenn der Auswertungswert unterhalb eines vorbestimmten Schwellenwerts ist.

12. Verfahren nach einem der vorhergehenden Ansprüche, **dadurch gekennzeichnet, dass** die Guthaben akkumuliert werden.

13. Verfahren nach einem der vorhergehenden Ansprüche, **dadurch gekennzeichnet, dass** ein negatives Guthaben bereitgestellt wird, wenn bestimmt wird, dass das Fahrzeug eine kürzere Entfernung als eine vorbestimmte Entfernung zurückgelegt hat.

14. Verfahren nach einem der vorhergehenden Ansprüche, **dadurch gekennzeichnet, dass** ein positives Guthaben bereitgestellt wird, wenn bestimmt wird, dass über eine vorbestimmte Bewegungsentfernung eine Beschleunigung höher als eine vorbestimmte Schwellenwertbeschleunigung und/oder ein Bremsen stärker als eine vorbestimmte Verzögerung nicht aufgetreten ist.

15. Verfahren nach einem der vorhergehenden Ansprüche, **dadurch gekennzeichnet, dass** Fahrinformationen über eine vorbestimmte zurückgelegte Entfernung und/oder ein Bewegungsmittelwert über eine vorbestimmte zurückgelegte Entfernung und/oder eine Vorgabefahrinformation dem Fahrer in Form einer graphischen Anzeige eines Diagramms bereitgestellt werden.

16. Verfahren nach einem der vorhergehenden Ansprüche, **dadurch gekennzeichnet, dass** das Verfahren ferner die Schritte eines Erfassens des Betriebes von Fahrzeughilfssystemen und eines Bereitstellens von Fahrinformationen, welche mit den Hilfssystemen in Beziehung stehen, für den Fahrer umfasst.

17. Verfahren nach einem der vorhergehenden Ansprüche, **dadurch gekennzeichnet, dass** das Verfahren ferner die Schritte eines Erfassens eines Straßenabschnitts, auf welchem sich das Fahrzeug bewegt, eines Zuordnens von Fahrinformationen und/oder Auswertungswerten, welche für den Straßenabschnitt gewonnen wurden, zu dem Straßenabschnitt, und eines Speicherns der zugeordneten Fahrinformationen und/oder Auswertungswerte umfasst.

18. Verfahren nach Anspruch 9 oder 17, **dadurch gekennzeichnet, dass** das Verfahren ferner die Schritte eines Bestimmens einer Route von einem Startpunkt zu einem Ziel unter Berücksichtigung von gespeicherten Auswertungswerten und/oder Fahrinformationen und eines Bereitstellens der Route für den Fahrer umfasst.

19. Verfahren nach einem der vorhergehenden Ansprüche, **dadurch gekennzeichnet, dass,** wenn ein Auswertungswert ein vorbestimmtes Kriterium erfüllt, eine Warnung an den Fahrer ausgegeben wird.

20. Verfahren nach Anspruch 19, **dadurch gekennzeichnet, dass** die Warnung ausgegeben wird, wenn bestimmt wird, dass die Beschleunigung des Fahrzeugs über einer vorbestimmten Schwellenwertbeschleunigung ist.

21. Verfahren nach einem der vorhergehenden Ansprüche, **dadurch gekennzeichnet, dass** die Fahrinformationen und/oder Auswertungswerte für einen individuellen Fahrer auf einem Datenträger gespeichert werden.

22. Verfahren nach einem der vorhergehenden Ansprüche, **dadurch gekennzeichnet, dass** die Fahrinformationen und/oder Auswertungswerte drahtlos zu einem Server übertragen werden.

23. System zum Bereitstellen von Fahrinformationen für einen Fahrer eines Fahrzeugs, umfassend:
- eine Informationsbereitstellungseinheit (101), welche Fahrinformationen des Fahrzeugs bereitstellt, wobei die Fahrinformationen zumindest einen Kraftstoffverbrauch des Fahrzeugs oder eine CO₂ Emission des Fahrzeugs umfassen,
- Speichermittel (107) zum Speichern von Referenzfahrinformationen,
- eine Auswertungseinheit (113), welche eine Auswertung der Fahrinformationen, welche von der Informationsbeschaffungseinheit (101) gewonnen wurden, durchführt,
**dadurch gekennzeichnet, dass** die Auswertung auf einem Vergleich zwischen den gewonnen Fahrinformationen und den Referenzfahrinformationen basiert, wobei ein Auswertungswert gewonnen wird, und ferner umfassend:
- eine Anzeigeeinheit (115), welche die Fahrinformationen, Referenzfahrinformationen und den Auswertungswert für den Fahrer des Fahrzeugs bereitstellt, wobei
Auswertungswerte dem Fahrer in Form von Guthaben bereitgestellt werden, welche als graphische Symbole auf der Anzeigeeinheit (117) angezeigt werden.

24. System nach Anspruch 23, **dadurch gekennzeichnet, dass** das Speichermittel (107) Speicherabschnitte, in welchen vergangene Fahrinformationen (108) gespeichert werden, Speicherabschnitte, in welchen Vorgabefahrinformationen (109) gespeichert werden, und Speicherabschnitte, in welchen Auswertungswerte (110) gespeichert werden, umfasst.

25. System nach Anspruch 23 oder 24, **dadurch gekennzeichnet, dass** die Informationsbeschaffungseinheit (101) das Steuernetz des Fahrzeugs umfasst.

26. System nach einem der Ansprüche 23 bis 25, **dadurch gekennzeichnet, dass** das System ferner eine Verarbeitungseinheit (106) umfasst, welche Fahrinformationen mittelt, welche von der Informationsbeschaffungseinheit (101) über eine vorbestimmte Fahrzeitdauer und/oder über eine vorbestimmte Fahrentfernung beschafft wurden.

27. System nach einem der Ansprüche 23 bis 26, **dadurch gekennzeichnet, dass** das System ferner eine Sensoreinheit (103) umfasst, welche Sensorinformationen bereitstellt, welche bei einer Verarbeitung oder bei der Auswertung der gewonnen Fahrinformationen verwendet werden.

28. System nach Anspruch 27, **dadurch gekennzeichnet, dass** die Sensoreinheit (103) einen GPS Sensor (114) umfasst, welcher eine Höhe einer Position des Fahrzeugs bereitstellt, wobei Änderungen der Höhe der Fahrzeugposition beim Durchführen der Auswertung der Fahrinformationen berücksichtigt werden.

29. System nach einem der Ansprüche 23 bis 28, **dadurch gekennzeichnet, dass** das System ausgebildet ist, um ein Verfahren nach einem der Ansprüche 1 bis 22 auszuführen.

30. Computerprogrammprodukt, welches in den internen Speicher eines Computers geladen werden kann, wobei das Produkt Softwarecodeabschnitte zum Ausführen eines der Verfahren nach einem der Ansprüche 1 bis 22 umfasst, wenn das Produkt ausgeführt wird.

## Revendications

1. Procédé pour fournir des données de conduite à un conducteur d'un véhicule, comprenant l'étape
- d'obtenir des données de conduite du véhicule, comprenant au moins la consommation de carburant (301) du véhicule ou l'émission de CO₂ du véhicule,
- d'effectuer une évaluation des données de conduite (301), **caractérisé en ce que** l'évaluation est basée sur une comparaison entre les données de conduite (301) et des données de conduite de référence (304, 305), une valeur d'évaluation (307, 308) étant obtenue,
et comprenant en outre l'étape
- de fournir au conducteur du véhicule les données de conduite (301), les données de conduite de référence (304, 305) et les valeurs d'évaluation (307, 308), les valeurs d'évaluation étant fournies au conducteur en tant que crédits affichés sous forme de symboles graphiques sur une unité d'affichage (117).

2. Procédé selon la revendication 1, **caractérisé en ce que** les données de conduite sont obtenues en recueillant des données de conduite sur une distance prédéterminé ou sur un intervalle de temps de conduite prédéterminé et en moyennant les données de conduite recueillies.

3. Procédé selon la revendication 1 ou 2, **caractérisé en ce que** les données de conduite sont obtenues en accédant au bus CAN du véhicule.

4. Procédé selon l'une quelconque des revendications précédentes, **caractérisé en ce que** les données de référence (112) comprennent des données de conduite par défaut (109) et/ou des données de conduite (108) antérieures.

5. Procédé selon l'une quelconque des revendications précédentes, **caractérisé en ce qu'**une pente d'une section de route parcourue par le véhicule lors du recueil des données de conduite est prise en compte lors d'une évaluation des données de conduite.

6. Procédé selon la revendication 5, **caractérisé en ce que** la pente de la section de route est obtenue par détermination des différences d'altitude en utilisant un capteur (114) de détermination de position.

7. Procédé selon l'une quelconque des revendications précédentes, **caractérisé en ce que** l'une ou une combinaison des données de véhicule suivantes est obtenue et prise en compte pour l'évaluation des données de conduite obtenues: vitesse du véhicule, distance parcourue par le véhicule, données de capteur de roue, vitesse de révolution du moteur du véhicule, température du moteur, pression des pneus, charge utile du véhicule.

8. Procédé selon l'une quelconque des revendications précédentes, **caractérisé en ce qu'**il comprend en outre l'étape de fournir des valeurs additionnelles d'évaluation basées sur le type de la route prise et/ou les conditions de conduite.

9. Procédé selon l'une quelconque des revendications précédentes, **caractérisé en ce qu'**il comprend en outre l'étape de stocker les données de conduite et/ou les valeurs d'évaluation obtenues.

10. Procédé selon la revendication 9, **caractérisé en ce qu'**il comprend en outre les étapes d'établir une valeur d'évaluation totale desdites valeurs d'évaluation stockées et de fournir la valeur d'évaluation totale (309) au conducteur.

11. Procédé selon l'une quelconque des revendications précédentes, **caractérisé en ce qu'**un crédit positif est fourni, si la valeur d'évaluation est au-dessus d'une valeur de seuil prédéterminée, alors qu'un crédit négatif est fourni si la valeur d'évaluation est au-dessous d'une valeur de seuil prédéterminée.

12. Procédé selon l'une quelconque des revendications précédentes, **caractérisé en ce que** les crédits sont accumulés.

13. Procédé selon l'une quelconque des revendications précédentes, **caractérisé en ce qu'**un crédit négatif est fourni s'il est déterminé que le véhicule a parcouru une distance plus courte qu'une distance prédéterminée.

14. Procédé selon l'une quelconque des revendications précédentes, **caractérisé en ce qu'**un crédit positif est fourni s'il est déterminé qu'une accélération plus élevée qu'une accélération seuil prédéterminée et/ou un freinage plus fort qu'une décélération prédéterminée n'a pas eu lieu au cours d'une distance parcourue prédéterminée.

15. Procédé selon l'une quelconque des revendications précédentes, **caractérisé en ce que** des données de conduite sur une distance parcourue prédéterminée et/ou une moyenne de déplacement sur une distance parcourue prédéterminée et/ou des données de conduite à défaut sont fournies au conducteur sous forme d'un affichage graphique d'un graphe.

16. Procédé selon l'une quelconque des revendications précédentes, **caractérisé en ce qu'**il comprend en outre les étapes de détection de l'activité de systèmes auxiliaires du véhicule et de fourniture des données de conduite associées auxdits systèmes auxiliaires au conducteur.

17. Procédé selon l'une quelconque des revendications précédentes, **caractérisé en ce qu'**il comprend en outre les étapes de détection d'une section de route sur laquelle le véhicule se déplace, d'attribution des données de conduite et/ou des valeurs d'évaluation obtenues pour ladite section de route à ladite section de route et de stockage des données de conduite et/ou des valeurs d'évaluation attribuées.

18. Procédé selon la revendication 9 ou 17, **caractérisé en ce qu'**il comprend en outre les étapes de déterminer une route à partir d'un point de départ vers une destination prenant en compte des valeurs d'évaluation et/ou des données de conduite stockées, et de fournir la route au conducteur.

19. Procédé selon l'une quelconque des revendications précédentes, **caractérisé en ce que**, si une valeur d'évaluation satisfait un critère prédéterminé, une alarme est émise à destination du conducteur.

20. Procédé selon la revendication 19, **caractérisé en ce que** l'alarme est émise s'il est déterminé que l'accélération du véhicule est au-dessus d'une accélération de seuil prédéterminée.

21. Procédé selon l'une quelconque des revendications précédentes, **caractérisé en ce que** les données de conduite et/ou les valeurs d'évaluation sont stockées sur un support de données destiné à conducteur individuel.

22. Procédé selon l'une quelconque des revendications précédentes, **caractérisé en ce que** les données de conduite et/ou les valeurs d'évaluation sont transmises sans fil à un serveur.

23. Système pour fournir des données de conduite à un conducteur d'un véhicule, comprenant:
- une unité de fourniture de données (101) fournissant des données de conduite du véhicule, les données de conduite comprenant au moins la consommation de carburant du véhicule ou l'émission de CO₂ du véhicule
- des moyens de stockage (107) stockant des données de conduite de référence,
- une unité d'évaluation (113) effectuant une évaluation des données de conduite obtenues de l'unité de fourniture de données (101),
**caractérisé en ce que** l'évaluation est basée sur une comparaison entre les données de conduite obtenues et les données de conduite de référence, une valeur d'évaluation étant obtenue, et **en ce qu'**il comprend en outre
- une unité d'affichage (115) fournissant au conducteur du véhicule les données de conduite, les données de conduite de référence et la valeur d'évaluation,
les valeurs d'évaluation étant fournies au conducteur en tant que crédits affichés sous forme de symboles graphiques sur l'unité d'affichage (117).

24. Système selon la revendication 23, **caractérisé en ce que** les moyens de stockage (107) comprennent des portions de mémoire dans lesquelles sont stockées des données de conduite antérieures (108), des portions de mémoire dans lesquelles sont stockées des données de conduite par défaut (109), et des portions de mémoire dans lesquelles sont stockées des valeurs d'évaluation (110).

25. Système selon la revendication 23 ou 24, **caractérisé en ce que** l'unité de fourniture de données (101) comprend le bus CAN du véhicule.

26. Système selon l'une quelconque des revendications 23-25, **caractérisé en ce qu'**il comprend en outre une unité de traitement (106) moyennant des données de conduite fournies par l'unité de fourniture de données (101) au cours d'un intervalle de temps de conduite prédéterminé et/ou au cours d'une distance parcourue prédéterminée.

27. Système selon l'une quelconque des revendications 23-26, **caractérisé en ce qu'**il comprend en outre une unité de capteur (103) fournissant des données de capteur utilisées pour un traitement ou pour l'évaluation des données de conduite obtenues.

28. Système selon la revendication 27, **caractérisé en ce que** l'unité de capteur (103) comprend un capteur GPS (114) fournissant une altitude d'une position du véhicule, des changements d'altitude avec la position du véhicule étant pris en compte pour effectuer l'évaluation des données de conduite.

29. Système selon l'une quelconque des revendications 23-28, **caractérisé en ce que** le système est établi de telle manière qu'il exécute un procédé selon l'une quelconque des revendications 1-22.

30. Produit programme d'ordinateur qui peut être chargé dans la mémoire interne d'un ordinateur, ledit produit comprenant des portions de code de logiciel pour effectuer l'un quelconque des procédés des revendications 1 à 22 lorsque le produit est exécuté.
